# EUROPEAN PATENT APPLICATION

(11) **EP 2 071 376 A1**
(43) Date of publication of application: **17.06.2009**
(21) Application number: 08170575.8
(22) Date of filing: 03.12.2008
(51) Int. Cl.: G02B 6/28, G02B 6/25

(54) **Optical fibre combiner with a preform comprising capillary bores and method of manufacturing thereof**

(30) Priority: 14.12.2007 WO PCT/FI2007/050691
(71) Applicant: Corelase OY, 33720 Tampere (FI)
(72) Inventor: Salokatve, Arto, FI-33710 Tampere (FI)
(74) Representative: Arvela, Sakari Mikael

(57) **Abstract**

The invention relates to an optical fiber combiner and a method for the manufacture thereof. The combiner comprises a tapering support preform comprising a plurality of capillary bores, a plurality of input fibers comprising a core and a cladding around the core and being arranged in parallel in the capillary bores of a support preform, and an output fiber coupled to the tapered end of the support preform in optical connection with the input fibers. According to the invention, the cladding thickness to core thickness ratio of at least one of the input fibers is decreased at the region of the support preform. The invention provides an optically high quality fiber combiner.

## Description

This invention is related to lasers and optical fibers. In particular, it is related to fiber-coupled lasers and fiber lasers. In the method according to the invention, optical radiation from multiple fibers is combined into a single fiber. The invention relates also to a fiber-optic component, hereinafter called a fiber combiner, used to combine optical radiation from several individual fibers and/or fiber-coupled lasers into a single output fiber or so called process fiber.

Fiber lasers have many attractive properties that make them suitable for various industrial applications. Such properties include good beam quality, easy thermal management, compact size, and good efficiency. Therefore, fiber lasers are continuing to gain market share from more conventional types of lasers, such as solid-state and gas lasers. Fiber lasers are able to produce optical output in the kW range with excellent beam quality. Thus, these lasers can be used for macro-machining applications like welding and cutting of metals. However, the optical output power offered by a single fiber laser operating in the so called single mode fashion, i.e. with beam quality being essentially diffraction limited, is often limited to around 1 kW. In many industrial applications, however, more laser power is required although there is no need to preserve the diffraction limited performance of the laser output. In other words, one can sacrifice in the beam quality if more output power is achieved. Thus, it is preferable to combine the output of several individual fiber lasers into a single process fiber and thus to achieve more output power from a single process fiber than would be possible by using only one fiber laser alone. In this process of combining the power of several fiber lasers the beam quality is necessarily degraded compared to the beam quality of each individual fiber laser. As mentioned above, however, this is often allowed provided that the said degradation is not too dramatic compared to what theoretically is possible to achieve.

Several fiber-optic couplers exist in prior art that have been primarily designed for coupling pump light into active double-clad fibers in fiber lasers. Such examples are described in US 5864644, US 7272956 and WO 2004/83921, for instance. These designs are not well suitable for low-loss coupling of high beam quality laser light into a single fiber.

In US 2005/105854 a bundle of fibers is formed around a central fiber, and they are first fused together. The bundle is then directly spliced to an output fiber. A problem associated with this kind of fusing is that the brightness is greatly reduced when light passes through the coupler.

WO 2007/107163 describes a coupler for coupling light from several input fibers into an output fiber. The coupler comprises a central recess in the output fiber, into which a plurality of input fibers in a fiber bundle are packed next to each other. The output fiber is tapered.

WO 2007/045082 describes a fiber optic coupler where the input fibers are inserted into multiple holes of a capillary tube. Usually polymeric coatings have been removed from the fibers before inserting them into the holes. The capillary with the inserted fibers are then drawn to reduce the diameter of the capillary and the fibers, and form a waist thereto. In the process the fibers are fused to the capillary, and the capillary is cleaved from the waist region, and spliced to another fiber. In another embodiment the capillary tube is first tapered and then the input fibers are inserted through the holes of it. The drawback of the first embodiment is that the fibers, and in particular their cores are tapered down in the process. In high power couplers the cores of the input fibers may guide light power in the kW range. Therefore, reducing the core diameter is not preferable since the core material may reach the optical breakdown limit at the reduced diameter. For instance, reducing the core diameter by a factor of two reduces the optical damage threshold for the core material by a factor of four. This is a risk one may not want to take in practice. A drawback present also in the alternative embodiment disclosed in WO 2007/045082 is that the fill-factor, i.e. the ratio between total core area and total area of glass is quite poor since the ratio between the areas of the cladding and core cross-sections in a typical fiber is about 100. Thus, brightness is greatly reduced in this coupler.

It is an aim of the invention to provide an improved method and device for combining radiation from several fiber sources to a single fiber.

In particular, it is an aim of the invention to provide a design using which the brightness of the light transmitted through the coupler is reduced less than in known couplers while retaining low optical losses in it.

A further aim of the invention is to provide a solution, which reduces the risk of generating signal quality deteriorating microbending of the input fibers.

The invention is based on the idea of reducing the outer diameter of at least one of the plurality of input fibers before fitting it into capillary bores of a tapered connector piece, hereinafter called a support preform or a capillary tube. In particular the invention is based on removing the cladding material on the fiber core in order to make the diameter of the input fiber inside the connector significantly smaller than the diameter of the incoming fiber. Thus, the cladding diameter to core diameter ratio of the at least one input fiber is substantially decreased at the region of the support preform. Similar treatment may be carried out for two or more of the input fibers, preferably all of them.

The fiber combiner according to the invention thus comprises a tapering support preform, a plurality of input fibers comprising a core and a cladding around the core and being arranged in parallel in capillary bores of a support preform, and an output fiber coupled to the tapered end of the support preform in optical connection with the input fibers. The cladding thickness of at least one of the input fibers is decreased at the region of the support preform.

In the method according to the invention cladding material is removed from at least one input fiber in order to reduce its thickness to a level corresponding to the smallest inner diameter of the respective capillary bore of the preform before inserting the input fiber into the capillary bore. After inserting the fiber, the preform and the input fiber in it are fused together within the region of the waist of the preform allowing the formed composite structure to be cleaved and spliced to the output fiber.

The invention allows for the radiation density inside the preform to be increased as compared with known fiber combiners, because the amount of cladding material, which typically forms at least 90 %, normally even over 98 % of the total cross-sectional area of optical fibers but does not carry light, is reduced at the coupling zone thus bringing the cores of the individual fibers closer to each other. We have, however, found that such reduction alone is not sufficient for optimal brightness. It is further preferable that the cores of the input fibers retain their dimensions and shapes through the coupler with no or minimal microbends in them. This goal is achieved using the present invention and therefore the numerical aperture of optical radiation travelling in the cores of the signal fibers through the coupler remains essentially unchanged and optical losses are minimized. In other words, the coupler according to the invention prevents said negative effects caused by microbending and only moderately reduces the brightness of the laser radiation coupled through it.

According to one embodiment, the diameters of the cores of the input fibers are essentially constant at the region of the support preform. That is, the reduction in the fiber overall diameter takes place exclusively in the cladding.

According to one embodiment, the cladding thickness at the tapered end of the support preform is at least 20 %, preferably 40 - 95 %, in particular 60 - 90 %, smaller than the cladding thickness of the input fibers incoming to the fiber combiner. In absolute numbers, in the case of a typical 125 µm fiber having a core with a diameter of 20 µm (cladding thickness 105 µm), the resulting cladding thickness is less than 85 µm, and may be as small as 10 µm, or even smaller. That is, the proportion of the core material is significantly raised, for example, to a level of 10 - 50 % of the total fiber cross-sectional area.

According to a preferred embodiment, the cladding is not entirely removed, in order to avoid direct contacting of the fiber core and the preform.

According to one embodiment, the cladding thickness is reduced by etching. Etching has been found to be a reliable and accurate method, thus providing fibers which can be closely fitted to the bores of the preform. This reduces backlashing of fibers within the preform, thus maintaining a high-quality light pathway at all times, and minimizes the risk of microbending of the fibers.

According to one embodiment, the bores of the support preform are tapering together with the outer shape of the preform. Preferably, the bore diameter to preform diameter ratio is essentially constant along the whole preform length. This can be achieved by stretching a constant-width preform under heat. Initially, the preform may have bores having an inner diameter of about 100 - 150 µm and separating wall thickness between the bores of about 20 - 40 µm. During the stretching, the diameters of both the bores and the separating walls are both shrunk by a factor of 3 - 5, for example.

According to one embodiment, the diameter of the tapered end of the support preform, ie, the diameter of a circle enclosing all cores of the input fibers at the tapered end of the support preform, is smaller than the diameter of the core of the output fiber. By this arrangement, it is ensured that all light from the input fibers is directed to the core of the output fiber.

According to one embodiment, the input fibers are fiber-laser fibers. According to another embodiment, the input fibers are connected to other sorts of laser sources, such as semiconductor lasers, or solid-state lasers, such as Nd-YAG lasers. According to one embodiment, the present fiber combiner is used to combine radiation from two or more different kinds of laser sources, in particular from several fiber lasers and several non-fiber lasers, such as diode lasers, into a single fiber.

According to a preferred embodiment, the support preform is a glass preform.

According to one embodiment, all the capillary bores of the support preform, and thus all the input fibers, are of the same size. According to an alternative embodiment, the fiber combiner is a hybrid combiner, meaning that the support preform comprises capillary bores of at least two different sizes. Preferably the bores in the middle portion of the preform are smaller in diameter than the bores at the fringe area of the preform. The latter embodiment has applications, for example, in laser welding.

Thus, the input fibers of the coupler may be connected to any output fibers of fiber-coupled and/or fiber lasers. It is even possible to use different types of laser sources connected to the input fibers. For example, as discussed later in more detail, the combiner may be used to direct laser radiation from a number of fiber-coupled semiconductor laser diodes and fiber lasers into a single output fiber.

According to a preferred embodiment the coupler is a fused all-glass component, meaning that no free-space optical components are needed to make the said coupler. Since optical radiation is propagating inside transparent glass through the coupler at all times, the optical radiation is not affected or disturbed by external influences, such as temperature variations, mechanical vibrations and contamination. Furthermore, no complicated alignment methods are needed that are typically required in coupler implementations using free-space optics.

The core of the output fiber may have a flat or non-flat refractive index profile, depending on the input fiber combination and the intended use of the combiner. In particular, if light is coupled from several fiber lasers and several non-fiber lasers, such as diode lasers, into a single fiber, is preferable to adapt the refractive index profile of the output fiber to the characteristics of input light in order to maintain the desired light distribution within the output fiber.

For later reference, some further terms or concepts related to fiber processing are briefly discussed below.

Splicing is a well-known term in the art of fiber optics. It refers to joining at least two glass parts together by heating the parts close to the joint to a high temperature to make the glass soft, and then pushing the parts into physical contact with each other. Hence, an intimate and transparent contact is formed between the parts. The heat source for splicing can be an electric arc, a hot filament or a CO₂ laser, for instance.

Cleaving means cutting a glass part in such a way that a flat surface is formed to it. In optical fibers, the cleave plane usually lies essentially perpendicular to the optical axis of the fiber (perpendicular cleave). It may also be essentially non-perpendicular (angle-cleave). Unless otherwise stated, in this document cleaving means producing a perpendicular cleave. An equivalent, although more laborious, means of getting a flat plane to the fiber tip is mechanical polishing. Cleaving can be done by mechanical means by scratching the fiber with a sharp blade made of hard material and applying tension to the fiber to break it, or by a laser. A good cleave for optical fibers makes high quality splicing possible.

Collapsing in this document refers to heating a hollow piece of glass, such as a capillary tube, in order to make it soft and to make it collapse by surface tension forces and/or by differential pressure between the inside and outside region of the piece. Heating can be done with the same methods as in splicing.

A distinction has to be made between a cladding layer and a coating layer of an optical fiber. "Cladding" is an integral part of a fiber and refers to one or more layers of material of lower refractive index, in intimate contact with a core material of higher refractive index (as defined in the Federal Standard 1037C and MIL-STD-188). Coating, as disclosed, for example, in WO 2007/045082, refers to a usually polymeric layer on the fiber for protecting the fiber mechanically and having no such optical function.

Next, the embodiments of the invention are discussed in more detail with reference to the appended drawings. In the drawings
Fig. 1 shows a cross-section of a multi-bore capillary tube.
Fig. 2 illustrates another example of a multi-bore capillary tube.
Fig. 3 shows a cross-sectional view of the fiber arrangement in a first step of manufacturing according to one embodiment.
Fig. 4 shows a cross-sectional view of the fiber arrangement in a further step of manufacturing according to one embodiment.
Fig. 5 shows a cross-sectional view of the fiber arrangement in a still further step of manufacturing according to one embodiment.
Fig. 6 shows a cross-sectional view of the fiber arrangement after the final step of manufacturing according to one embodiment.
Fig. 7a shows an exemplary cross-section taken at the location of the splicing plane.
Fig. 7b shows the refractive index profile of the fiber according to Fig. 7a.
Fig. 8a shows another exemplary cross-section taken at the location of the splicing plane.
Fig. 8b shows the refractive index profile of the fiber according to Fig. 8a.

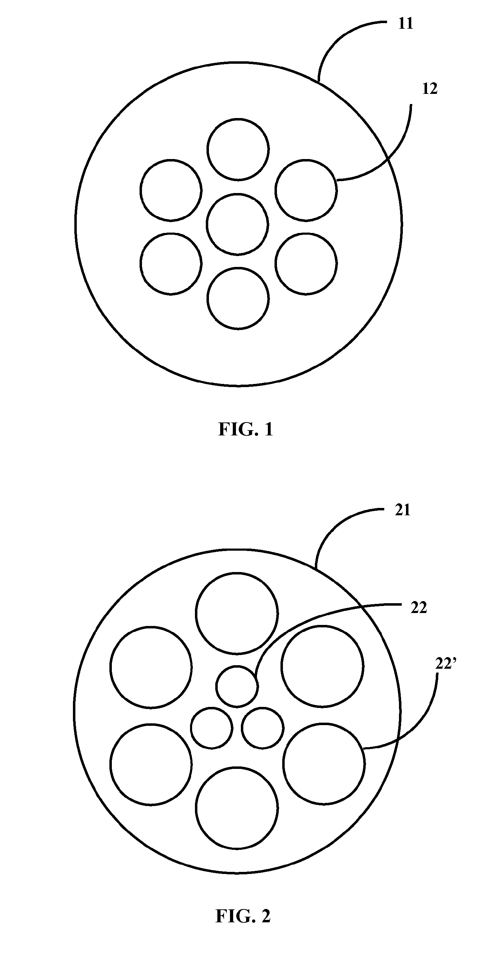

Figure 1 shows a cross-section of a multi-bore capillary tube 11. The tube 11 is made of transparent glass material, preferably fused silica, fused quartz or some doped forms of them. The said materials are well matched with optical fibers in terms of thermal expansion coefficient. Since most common optical fibers are based on fused silica, it is a natural choice as the material for the said capillary tube. More than one bores or longitudinal holes 12 run through the tube in parallel with the longitudinal axis of the tube 11. In the example of Fig. 1 the seven bores are of equal diameter. In this case the capillary tube 11 may be used to combine seven lasers to a single output fiber.

Figure 2 shows another example of a multi-bore capillary tube 21. As shown, bores 22 and 22' of different diameters can be implemented into the same multi-bore capillary tube 21. In this example, the capillary tube 21 can be used to combine the optical radiation from two different types of input fibers into a single output fiber.

The multi-bore capillary tubes 11, 21, such as those of Figures 1 and 2, form the basic building block for the present coupler. The bores 12, 22, 22' ofthe capillary tube 11, 21 form a channel through which the input optical fibers of the coupler are inserted.

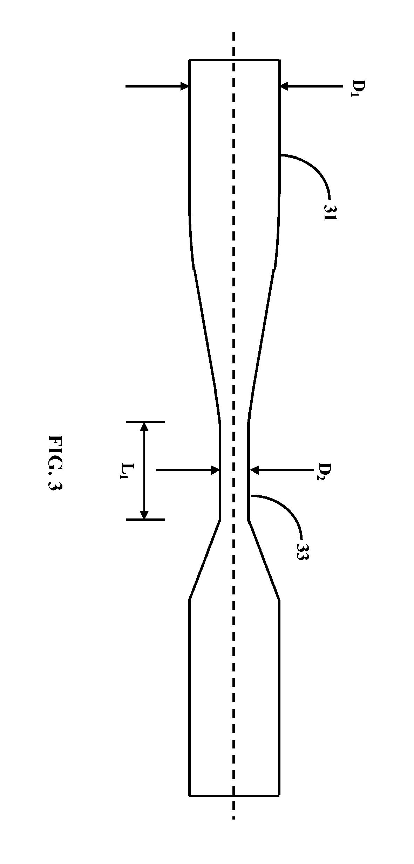

The manufacturing of the coupler, according to one embodiment, starts by forming a taper to a multi-bore capillary tube 31, as shown in Figure 3. Tapering is done preferably by well-known glass drawing methods. Such drawing methods at least to a good approximation preserve the relative dimensions and shapes ofthe cross-section ofthe part. In this case it means that the ratio of the outer diameter of the capillary tube and a bore diameter remains constant throughout the taper. The initial outer diameter of the tube 31 is D₁, and the diameter at the waist 33 of the taper is D₂. The waist length is L₁, which typically equals to a few millimeters to few centimeters. The capillary tube 31 has essentially constant outer diameter in the waist region 33. It should be noted that the real implementations ofthe tapered capillary tubes may have taper profiles differing from that of Fig. 3, which only shows the essential features of the taper.

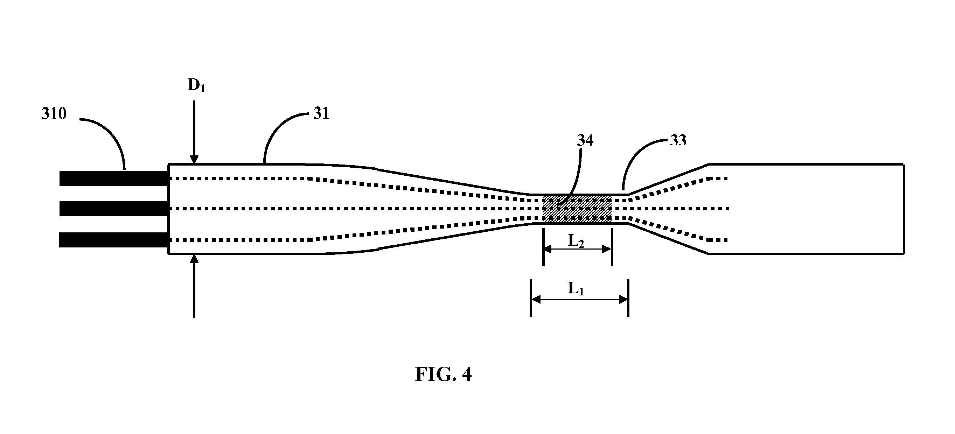

Figure 4 shows a number of input fibers 310 inserted into the bores 32 of the capillary tube. The fibers running inside the bores 32 are denoted by dotted lines. The diameters of the input fibers are essentially matched with the bore diameters inside the waist 33 of the capillary tube 31. This means that the diameters of the input fibers, at least at the waist location, are slightly smaller than the bore diameters at the waist 33. Slightly here means by a maximum of few microns, depending on the bore diameter. There may be two strategies to achieve the matching. One may design the bore diameters so that a particular fiber goes through it at the waist location. Otherwise, one may etch down the cladding of an input fiber to fit a particular bore size at the waist location in such a way that the core of the fiber remains intact. Regardless of the method of fiber to bore matching, the end result is that the input fibers, or more precisely at least their cores, are running through the waist region 33 ofthe taper. Figure 4 also shows a shaded region 34 of length L₂ inside the waist region 33 of the capillary tube 31. Inside this region the capillary tube 31 is collapsed onto the input fibers. This collapsing results in a region of solid glass, since the interface between the input fibers and the capillary bores essentially vanish inside the said region 34. It is evident to a person skilled in the art, that the capillary tube 31 can then be cleaved at some location inside the collapsed region 34.

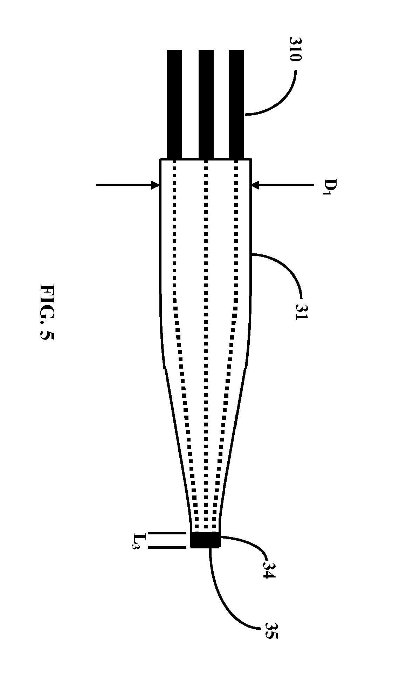

Figure 5 shows a tapered, collapsed and cleaved capillary tube 31. Cleaving is performed in such a way that a small collapsed portion of length L₃ of the waist 33 remains on the tube 31. The cleaved surface 35 can then be directly spliced to the cleaved end of the output process fiber.

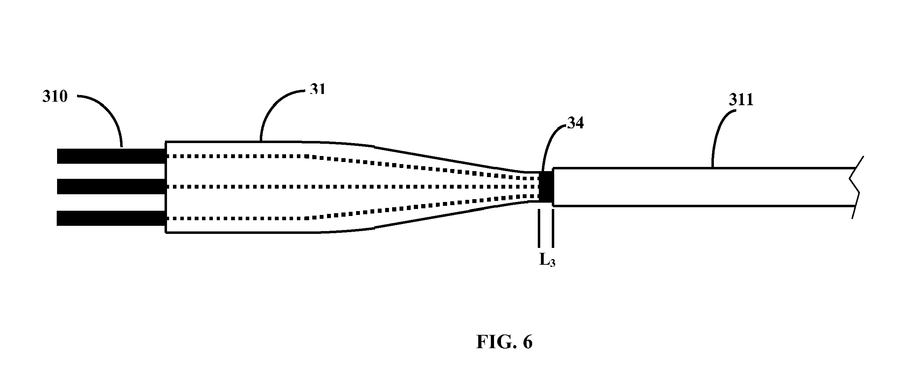

Figure 6 shows a tapered, collapsed and cleaved capillary tube 31 with the cores of the input fibers 310 extending all the way to the cleave plane 35. To the plane 35, the cleaved end of the output fiber 311 has been spliced.

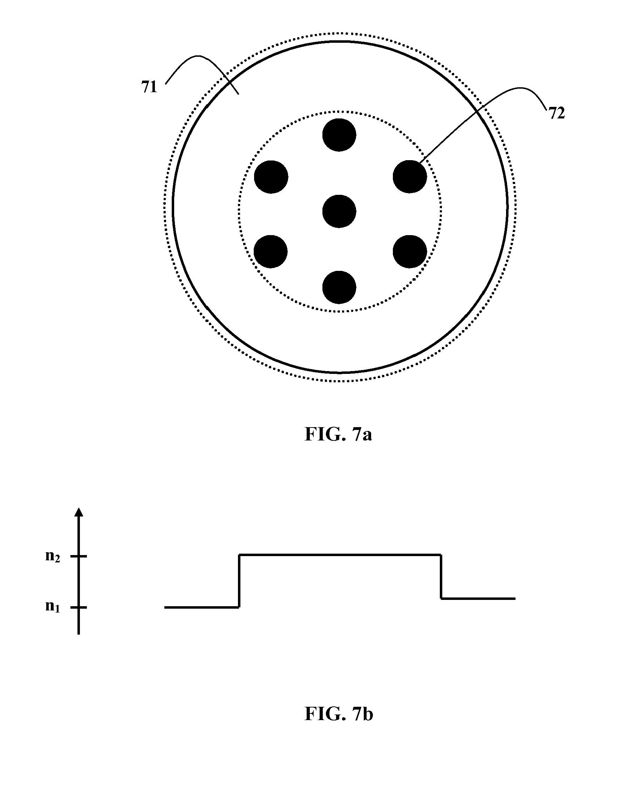

The dimensions of the coupler structure are designed so that the cores of the input fibers within the collapsed region 34 and thus at plane 35 lie inside the perimeter of the core of the output fiber. Figure 7a shows an example cross-section taken at the location of the plane 35. Solid lines denote the collapsed end of the capillary tube 31 (numeral 71) with the cores of seven input fibers 310 marked (numeral 72). The dotted lines denote the outer perimeter and the core perimeter of the output fiber. As shown, the cores of the input fibers lie inside the core perimeter of the output fiber. Thus, low-loss coupling of light from the cores of the input fibers to the core of the output fiber is possible. Furthermore, to minimize the optical losses, the numerical aperture of the input fibers needs to be equal to or smaller than the numerical aperture of the output fiber. The refractive index profile of the output fiber is shown in Figure 7b.

Since the input fibers within region 33 are well matched to the bores of the capillary in the said region, the collapsing procedure inside region 34 produces minimal distortions, i.e. dimensional or shape changes, to the capillary. Thus, the core dimensions or shapes of the input fibers remain essentially unchanged as well. This means that the optical radiation traveling inside the cores of the input fibers is not much affected by the collapsed region. Thus, the collapsed region preserves the beam quality of the radiation. What then determines the optical brightness of radiation in the core of the output fiber is the numerical aperture of the light inside the core of the input fibers (NA₁), the diameter of the core of the output fiber, and the power coupled into it. Finally this comes to the point that in order to maximize brightness in the output fiber, one needs to maximize the filling factor, i.e. the ratio between the total area of the cores of the input fibers and the area of the core of the output fiber. Thus, one wants to have as dense packing of the cores of the input fibers as possible and minimize the output fiber core diameter with the geometrical restrictions discussed above.

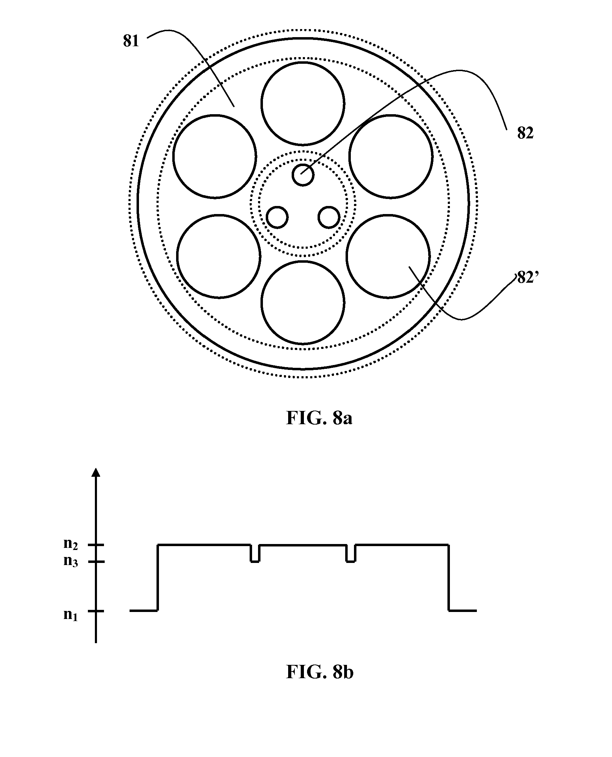

Figure 8 shows another possible fiber arrangement. In this example, two different types of input fibers differing in diameter are used. The inner fibers 82 are preferably coupled to an intensive laser source, such as a fiber laser or a solid-state laser, and the outer fibers 82', are preferably coupled to less intensive laser sources, such as semiconductor (e.g., diode) lasers. Such an arrangement, where the light focus is in the centre, provides advantages in welding of metals, for example, where the radiation from diode lasers could provide a heat source for melting the metal around the joint and supply extra material to it while the radiation from the fiber lasers would form the primary heat source for efficiently joining the metals together. This kind of process could replace the currently used hybrid welding methods, i.e. welding by laser and non-laser methods simultaneously, by a pure laser welding, or more accurately hybrid laser welding method. The present method provides a robust way of producing also this kind of efficiently coupled hybrid laser sources.

## Claims

1. An optical fiber combiner comprising
- a tapering support preform comprising a plurality of capillary bores,
- a plurality of input fibers comprising a core and a cladding around the core and being arranged in parallel in the capillary bores of a support preform, and
- an output fiber coupled to the tapered end of the support preform in optical connection with the input fibers,
**characterized in that** the cladding thickness to core thickness ratio of at least one of the input fibers is decreased at the region of the support preform.

2. The optical fiber combiner according to claim 1, **characterized in that** the diameter of the core of said at least one input fiber is essentially constant at the region of the support preform.

3. The optical fiber combiner according to any of the preceding claims, **characterized in that** the cladding thickness of the at least one input fiber at the tapered end of the support preform is at least 20 %, preferably 40 - 95 %, in particular 60 - 90 %, smaller than the cladding thickness of said at least one input fiber incoming to the fiber combiner.

4. The optical fiber combiner according to any of the preceding claims, **characterized in that** also the bores of the support preform are tapering, the bore diameter to preform diameter ratio being preferably essentially constant.

5. The optical fiber combiner according to any of the preceding claims, **characterized in that** the support preform is a glass preform, the fiber combiner preferably being a fused all-glass component.

6. The optical fiber combiner according to any of the preceding claims, **characterized in that** all the capillary bores of the support preform are of the same size.

7. The optical fiber combiner according to any of claims 1 - 5, **characterized in that** the support preform comprises capillary bores of at least two different sizes, preferably such that bores in the middle portion of the preform are smaller in diameter than bores at the fringe area of the preform.

8. The optical fiber combiner according to any of the preceding claims, **characterized in that** the cladding of at least said at least one input fiber is fused with the inner wall of the support preform at the tapered end of the support preform.

9. The optical fiber combiner according to any of the preceding claims, **characterized in that** the core of the output fiber has an essentially flat refractive index profile.

10. The optical fiber combiner according to any of the preceding claims, **characterized in that** the core of the output fiber has a non-flat refractive index profile.

11. A method for manufacturing an optical coupler for combining radiation from a plurality of input fibers to a single output fiber using a preform supporting the input fibers, the preform comprising a plurality of capillary bores, the method comprising
- providing a plurality of input fibers having a core and a cladding around the core,
- inserting the input fibers into the capillary bores, and
- optically connecting ends of the input fibers within the support preform to the output fiber,
**characterized by** removing cladding material from at least one of the input fibers in order to reduce its thickness before inserting the input fiber into a capillary bore.

12. The method according to claim 11, **characterized in that** the support preform is a tapering support preform manufactured by
- providing a support preform having a plurality of capillary bores of essentially constant diameter, and
- forming a taper to the support preform by heating and drawing the preform such that both the outer diameter of the preform and the diameters of the bores decrease locally.

13. The method according to claim 11 or 12, **characterized in that** the removal of the cladding material is carried out such that the core of the at least one input fiber remains essentially intact, preferably by etching, in particular such that the cladding thickness is reduced by at least 20 %, preferably 40 - 95 %, in particular 60 - 90 %, as compared with the initial cladding thickness of the input fiber.

14. The method according to any of claims 11 - 13, **characterized in that** after inserting the input fibers into the capillary bores, the support preform is at least locally collapsed to intimately contact with the input fibers.

15. The method according to any of claims 11 - 14, **characterized in that**
- the input fibers are fused with the inner walls of the capillary bores of the support preform,
- the support preform containing the input fibers is cleaved in order to form a cleaved end, and
- the cleaved end of the support preform is spliced with an end of the output fiber in order to form said optical connection.

16. The method according to any of claims 11 - 15, **characterized in that**
- the support preform is locally stretched under heat in order to form a waist in the glass preform,
- the input fibers are inserted into the bores of the support preform such that they penetrate through the waist,
- the waist is collapsed,
- the collapsed waist is cleaved in a plane perpendicular to the fibers,
- another optical element is spliced to the collapsed end of the preform.
